(19) **Europäisches Patentamt / European Patent Office / Office européen des brevets**

(11) **EP 1 855 401 A1**

(12) **EUROPEAN PATENT APPLICATION**
published in accordance with Art. 158(3) EPC

(43) Date of publication:
**14.11.2007 Bulletin 2007/46**

(51) Int Cl.:
**H04J 1/00** (2006.01)

(21) Application number: **05719807.9**

(22) Date of filing: **02.03.2005**

(86) International application number:
**PCT/JP2005/003492**

(87) International publication number:
**WO 2006/092856 (08.09.2006 Gazette 2006/36)**

(84) Designated Contracting States:
**DE FR GB**

(71) Applicant: **FUJITSU LIMITED**
**Kawasaki-shi,**
**Kanagawa 211-8588 (JP)**

(72) Inventors:
• **ISHIZU, Eizou,**
**Fujitsu Network Technologies Ltd.**
**Yokohama-shi, Kanagawa 2220033 (JP)**

• **FUJITA, Eiji,**
**Fujitsu Network Technologies Ltd.**
**Yokohama-shi, Kanagawa 2220033 (JP)**

(74) Representative: **HOFFMANN EITLE**
**Patent- und Rechtsanwälte**
**Arabellastrasse 4**
**81925 München (DE)**

(54) **MULTI-CARRIER COMMUNICATION METHOD AND BASE STATION AND MOBILE STATION USED FOR THE SAME**

(57)    The present invention is a multi-carrier communication method for carrying out communication between a mobile station and a base station with the use of a plurality of carrier frequencies within the same area, wherein a reception quality correspondent value of each of the plurality of carrier frequencies in the mobile station is detected, a carrier frequency to be used for communication is determined based on the reception quality correspondent values, so that communication is carried out with the carrier frequency having high reception quality and reception quality can be improved.

FIG.4

**Description**

TECHNICAL FIELD

The present invention relates to a multi-carrier communication method, and a base station and a mobile station used therefor, and, to a multi-carrier communication method, and a base station and a mobile station used therefor, in which identification information of mono is made public, and authentication is made when information of mono, corresponding to the identification information, is read.

BACKGROUND ART

Recently, the number of users of mobile communication increases explosively due to the spread thereof. Thereby, such a situation that accommodation of the increasing users may not be possible by radio bands prescribed so far, is predicted. Along with such a situation, 3GPP (3rd generation Partnership Project) who has been developing a third generation mobile communication (W-CDMA: Wideband Code Division Multiple Access) system, proceeds with studies for a specification by which, in addition to a carrier frequency (fc) 2 GHz band prescribed so far, a 17 GHz band and a 800 MHz band will be made available. This means that a carrier frequency used in W-CDMA is made into multi-carrier.

Generally speaking, a multi-carrier communication method is such that, a frequency band prescribed with a carrier frequency as a central frequency thereof is divided into a plurality of bands (sub-carriers), and communication is carried out therewith. As a result, radio channel characteristics of the respective sub-carries are those very similar to each other.

It is noted that Patent Document 1 mentions that quality degradation is prevented, when switching is made between the 800 MHz band and the 1.5 GHz band.

Non-patent Document 1: Masaaki Shindo: 'Radio Wave Propagation of Radio Communication', Institute of Electronics, Information and Communication Engineers, page 230;

Non-patent Document 2: Yoshihisa Okumura, Masaaki Shindo: 'Basis of Mobile Communication', Institute of Electronics, Information and Communication Engineers, page 63; and

Patent Document: Japanese Laid-Open Patent Application 7-87544

SUMMARY OF THE INVENTION

PROBLEM TO BE SOLVED BY THE INVENTION

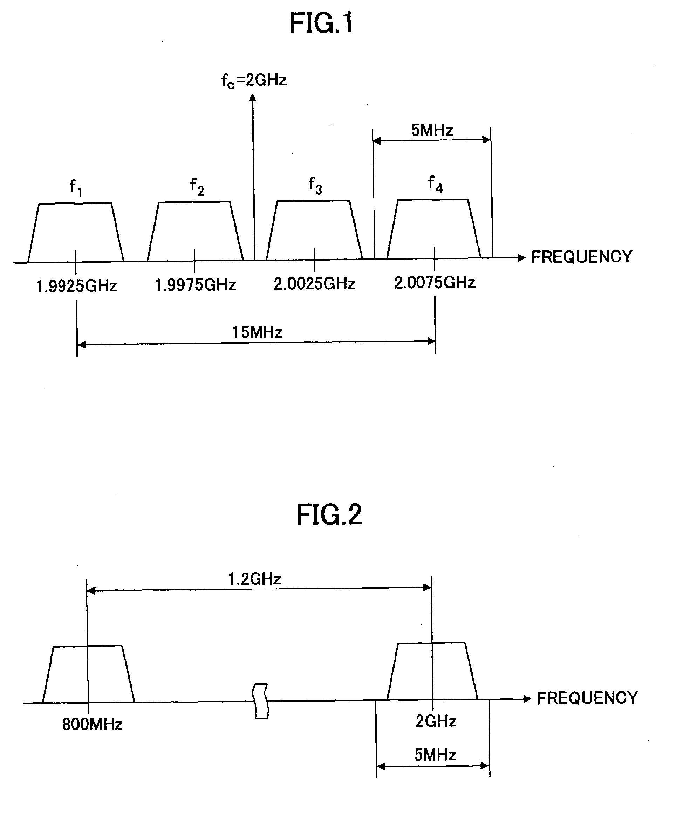

As shown in FIG. 1, a description will now be made for an example in which W-CDMA with a carrier frequency of 2 MHz and an operating band width (BW) is 5 MHz, is made into 4-multi-carrier.

First, a propagation loss which is one of radio propagation channel characteristics is focused attention on. Further, a propagation loss (L) for a distance (d) is expressed by the following formula (see Non-patent Document 1):

$$L = 69.55 + 26.16 \log fc - 13.82 \log h_1$$
$$- a(h_2) + (44.9 - 6.55 \log h_1) \log d \ [dB]$$
$$a(h_2) = (1.1 \log fc - 0.7) h_2$$
$$- (1.56 f - 0.8)$$
$$\cdots (1)$$

There, fc: carrier frequency [MHz], $h_1$: base station antenna height [m], $h_2$: mobile station antenna height [m], d: propagation distance [km].

From the formula (1), it is seen that the propagation loss increases as the carrier frequency increases.

There, a difference in the propagation losses between $f_1$ and $f_4$ having the largest frequency difference merely amounts to approximately 0.09 [DB] when the antenna heights of the base station and the mobile station, and the propagation distance are common. Therefore, it is expected that reception electric field intensity, between the cases where $f_1$ and $f_4$ are used, is approximately the same, i.e., the reception quality is the same. Therefrom, with respect to the reception quality, there hardly exists merit to control as to whether $f_1$ or $f_4$ is used.

Further, the maximum Doppler frequency which is one of the radio propagation channel characteristics will now be focused attention on. The maximum Doppler frequency (fd) is expressed by the following formula (2) with respect to a movement speed (v) (see Non-patent Document 2).

$$fd = \lambda \diagup v$$
$$= fc \cdot v/c \quad \dots (2)$$

There c: velocity of light, and fc: carrier frequency.

From the formula (2), it is seen that, as the carrier frequency increases, the maximum Doppler frequency increases. There, a difference in a ratio of the maximum Doppler frequencies between $f_1$ and $f_4$ having the largest frequency difference merely amounts to approximately 0.75 [%]. Therefore, it is expected that the maximum Doppler frequencies are approximately equal between the cases where $f_1$ and $f_4$ are used.

Generally speaking, it is known that reception quality degrades as the maximum Doppler frequency increases. In this case, it is expected that the reception qualities are approximately equal between $f_1$ and $f_4$, and there hardly exists merit to control the operating sub-carrier.

The present invention has been devised in consideration of the above-mentioned point, and a general object of the present invention is to provide a multi-carrier communication method, and a base station and a mobile station used therefor, by which reception quality can be improved.

MEANS FOR SOLVING THE PROBLEM

In order to achieve the object, a multi-carrier communication method according to the present invention is a multi-carrier communication method for carrying out communication between a mobile station and a base station with the use of a plurality of carrier frequencies within the same area, detecting a reception quality correspondent value of each of the plurality of carrier frequencies in the mobile station, and determining a carrier frequency to be used for communication based on the reception quality correspondent values.

ADVANTAGEOUS EFFECTS OF THE INVENTION

By such a multi-carrier communication method, communication is carried out with a carrier frequency having high reception quality, and the reception equality can be improved.

BRIEF DESCRIPTION OF THE DRAWINGS

FIG. 1 is a drawing for illustrating a case where W-CDMA with a carrier frequency of 2 GHz and an operating band width (BW) of 5 MHz is made into multi-carrier.
FIG. 2 is a drawing for illustrating a case where W-CDMA with an operating band width (BW) of 5 MHz and carrier frequencies of 2 GHz and 800 MHz is made into multi-carrier.
FIG. 3 is a drawing showing a cell configuration of one embodiment of the present invention.
FIG. 4 is a drawing showing a block configuration of a first embodiment of the present invention.
FIG. 5 is a drawing showing an operation sequence of the first embodiment of the present invention.
FIG. 6 is a drawing showing a block configuration of a second embodiment of the present invention.
FIG. 7 is a drawing showing an operation sequence of the second embodiment of the present invention.
FIG. 8 is a drawing showing a block configuration of a third embodiment of the present invention.
FIG. 9 is a drawing showing an operation sequence of the third embodiment of the present invention.
FIG. 10 is a drawing showing a block configuration of a fourth embodiment of the present invention.
FIG. 11 is a drawing showing an operation sequence of the fourth embodiment of the present invention.
FIG. 12 is a drawing showing a block configuration of a fifth embodiment of the present invention.
FIG. 13 is a drawing showing an operation sequence of the fifth embodiment of the present invention.
FIG. 14 is a drawing showing a block configuration of a sixth embodiment of the present invention.
FIG. 15 is a drawing showing an operation sequence of the sixth embodiment of the present invention.

DESCRIPTION OF THE REFERENCE NUMERALS

1, 2 base station
3, 4 cell
10 base station
11 annunciation information transmission part
12, 36 data transmission part
13, 14 frequency changing part
15 mixing part
16, 27, 39 reception part
17, 29, 32, 33, 37, 40, 41, 43, 44 operating frequency control part
18, 26 switch
20 mobile station
22, 23 reception electric field intensity changing part
24 comparison information generation part
25 transmission part
31 positional information detection part
33 movement speed detection part

BEST MODE OF CARRYING OUT THE INVENTION

Embodiments of the present invention will now be described based on drawings.

For the purpose of simplification, a configuration of an example of making into multi-carrier in which two carriers of carrier frequencies of 2 GHz and 800 MHz are used, is shown. It is noted that, as to the operating carrier frequency, it is not necessary to limit to the above-mentioned frequencies when radio propagation channel characteristics are different.

First, a principle of the present invention is described. As shown in FIG. 2, when making into multi-carrier is carried out with carrier frequencies of 2 GHz and 800 MHz and an operating band width (BW) of 5 MHz, a difference in a propagation loss between both is approximately 10.4 [DB], from the formula (1), in a case where antenna heights of a base station and a mobile station, and a propagation distance are common.

Therefore, it is possible to obtain higher communication quality by using the carrier of the carrier frequency 800 MHz with respect to the carrier frequency of 2 GHz.

Further, as shown in FIG. 2, when making into multi-carrier is carried out with the carrier frequencies of 2 GHz and 800 MHz and the operating band width (BW) of 5 MHz, a ratio of the maximum Doppler frequencies between both is approximately 40 %.

Therefore, it is possible to obtain higher communication quality by using the carrier of the carrier frequency 800. MHz with respect to the carrier frequency of 2 GHz.

The present invention focuses attention on that the radio propagation channel characteristics differ as mentioned above,.

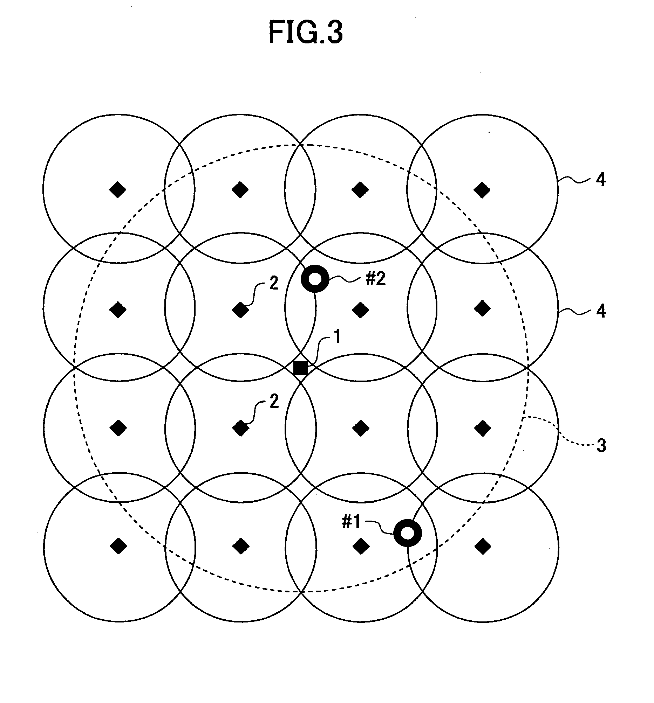

FIG. 3 shows a cell configuration of one embodiment of the present invention. In FIG. 3, cell 3 formed by a base station 1 having the carrier frequency of 800 MHz is indicated by a broken line, while, cells 4 formed by base stations 2 having the carrier frequency of 2 GHz are indicated by solid lines.

There, as described above, the propagation loss increases as the carrier frequency increases, and as a result, the cell radius of the carrier frequency of 2 GHz is made smaller while, the cell radius of the carrier frequency of 800 MHz is made larger.

<First Embodiment>

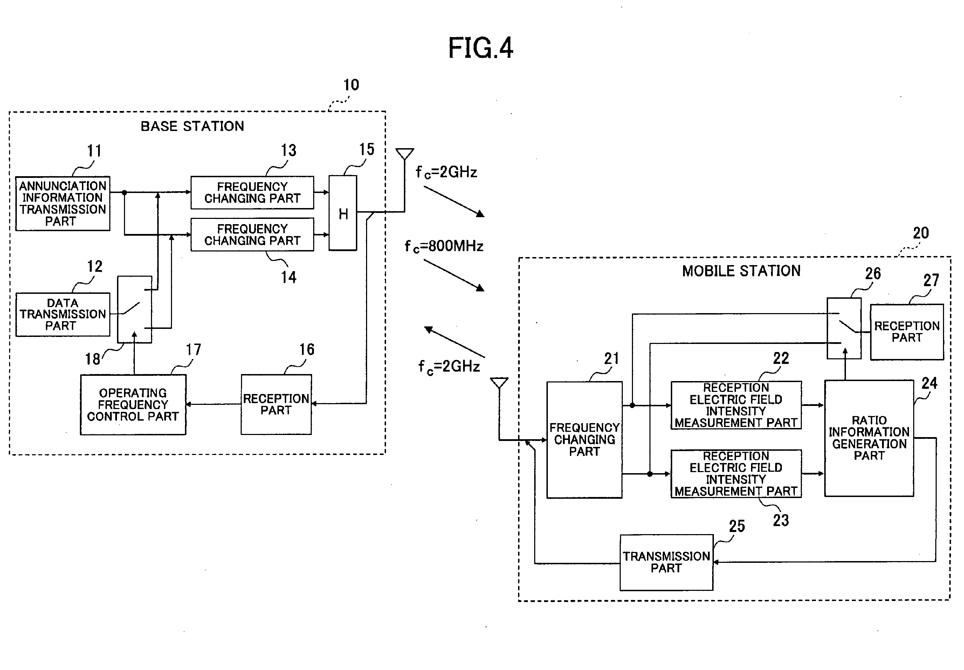

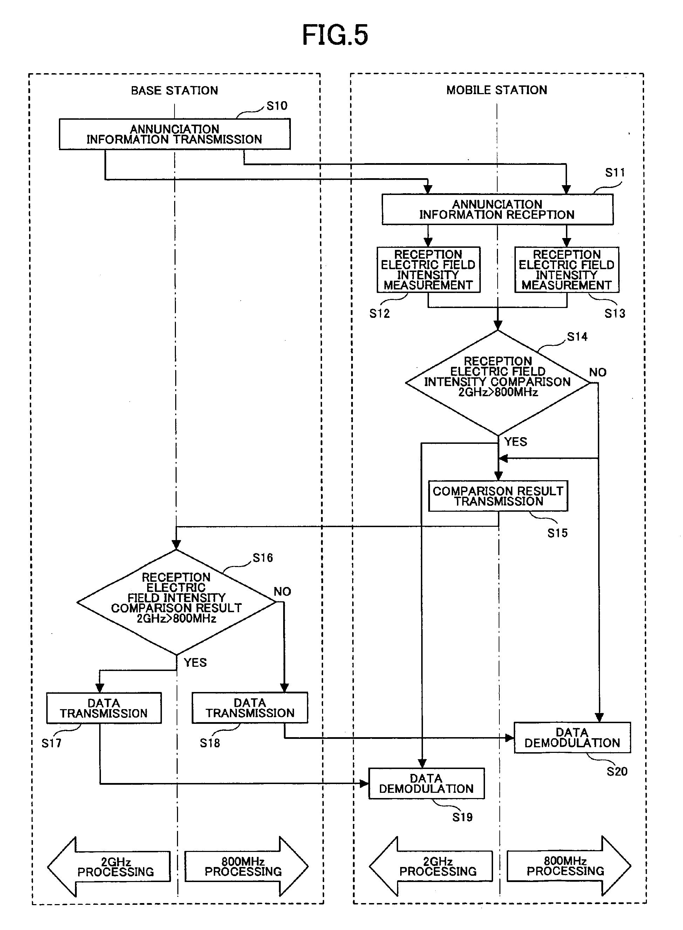

FIG. 4 shows a block configuration of a first embodiment of the present invention and FIG. 5 shows an operation sequence of the first embodiment of the present invention. In FIG. 4, in a base station 10, an annunciation information transmission part 11 outputs annunciation information and common control information. A data transmission part 12 outputs control data and user data. A frequency changing part 13 changes a transmission signal of the provided annunciation information and common control information or control data and user data, into the carrier frequency of 2 GHz.

A frequency changing part 14 changes the transmission signal of the provided annunciation information and common control information or control data and user data, into the carrier frequency of 800 MHz. A mixing part 15 mixes the transmission signals of the above-mentioned carrier frequencies 2 GHz and 800 MHz, and transmits the same from an antenna.

A reception part 16 demodulates a signal received by the antenna and extracts a reception electric field intensity comparison result transmitted by a mobile station 20. An operating frequency control part 17 controls a switch 18 according to the thus-extracted reception electric field intensity comparison result, and provides the control and user data from the data transmission part 12, to either the frequency changing part 13 or 14.

In the mobile station 20, a frequency changing part 21 separates a signal received via an antenna into components of the carrier frequencies of 2 GHz and 800 MHz, provides the component of the carrier frequency 2 GHz to a reception electric field intensity changing part 22, and provides the component of the carrier frequency 800 MHz to a reception electric field intensity changing part 23. The reception electric field intensity measurement parts 22 and 23 measure reception electric field intensity in the carrier frequencies as reception quality correspondent values.

A comparison information generation part 24 compares the reception electric field intensity, provides a comparison result to a transmission part 25, and also, controls a switch 26 based on the comparison result. The transmission part 25 maps the reception electric field intensity comparison result to a physical channel corresponding to the annunciation information, and transmits the same from the antenna, to the base station 10.

The switch 26 provides either one of the components of the carrier frequencies 2 GHz and 800 MHz output by the frequency changing part 21, to a reception part 27. The reception part 27 demodulates the provided signal.

In FIG. 5, the annunciation information and common control information from the base station 10 are transmitted by both carrier frequencies 2 GHz and 800 MHz (Step S10).

In the mobile station 20, the frequency changing part 21 separates the reception signal into the two carrier frequency components (Step S11). The reception electric field measurement parts 22 and 23 measure the reception electric field intensity of the carrier frequencies 2 GHz and 800 MHz, respectively (Steps S12, S13).

The comparison information generation part 24 compares the reception electric field intensity (Step S14), the transmission part 25 maps the reception electric field intensity comparison result to the physical channel corresponding to the annunciation information, and transmits the same by the carrier frequency 2 GHz to the base station 10 (Step S15). It is noted that the carrier frequency by which the mobile station 10 transmits the reception electric field intensity comparison result may be one of or both of 2 GHz and 800 MHz.

In the base station 10, the reception part 16 extracts the reception electric field intensity comparison result transmitted by the mobile station 20, and the operating frequency control part 17 uses the reception electric field intensity comparison result to determine a frequency by which data (the control data and user data) other than the annunciation information and common control information are to be transmitted (Step S16).

A method to determine is executed by selection of a frequency having high reception electric field intensity. There, as the reception electric field intensity used for the selection, instantaneous data, an average for a fixed period, a moving average or such, may be used.

As a result, the data other than the annunciation information and common control information is transmitted by either one of the carrier frequencies 2 GHz and 800 GHz, having higher reception quality (Steps S17, S18).

In the mobile station 20, the switch 26 is controlled based on the comparison result, and either one of the carrier frequencies 2 GHz and 800 GHz, having higher reception quality, is demodulated by the reception part 27 (Steps S19, S20).

As a result, it is possible to carry out communication with the frequency, having the larger reception electric field intensity in the mobile station 20, i.e., having the higher reception quality. For example, in the cell configuration shown in FIG. 3, the mobile station of the position #1 is far from the base station 1 of the carrier frequency 800 MHz, while it is close to the base station 2 of the carrier frequency 2 GHz. As a result, reception electric field intensity of the carrier frequency 2 GHz is larger than reception electric field intensity of the carrier frequency 800 MHz, and as a result, the carrier frequency 2 GHz is used for communication of the control data and user data.

Further, the mobile station of the position #2 is close to the base station 1 of the carrier frequency 800 MHz, while it is far from the base station 2 of the carrier frequency 2 GHz. As a result, reception electric field intensity of the carrier frequency 800 MHz is larger than reception electric field intensity of the carrier frequency 2 GHz, and as a result, the carrier frequency 800 MHz is used for communication of the control data and user data.

<Second Embodiment>

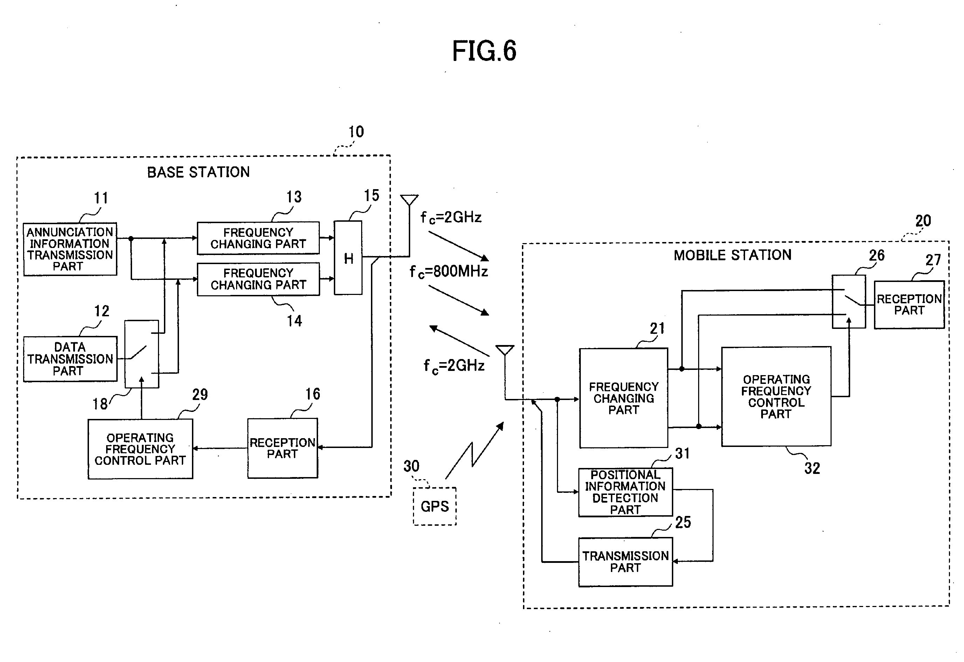

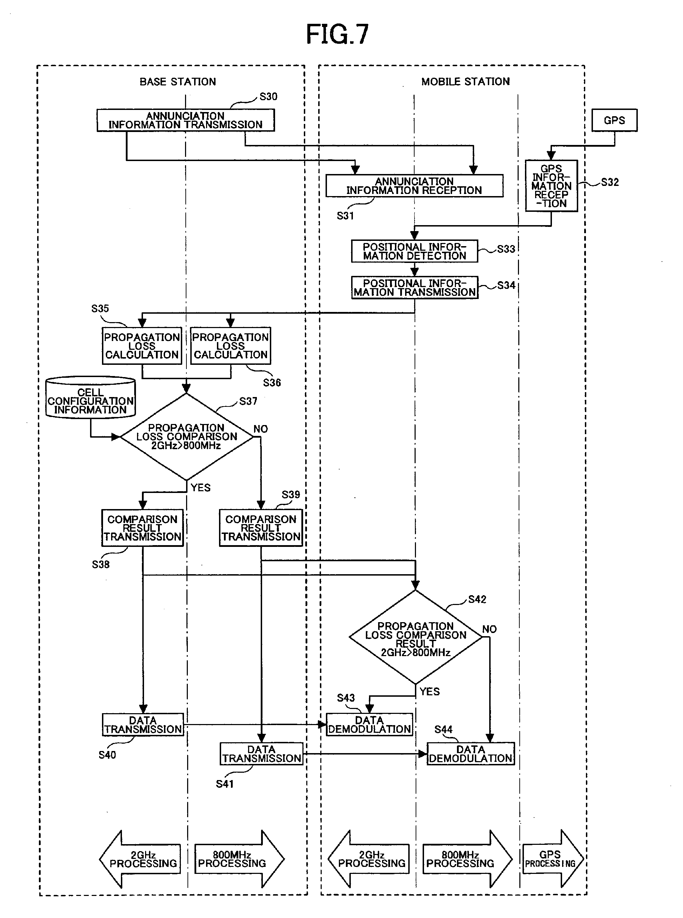

FIG. 6 shows a block configuration of a second embodiment of the present invention, and FIG. 7 shows an operation sequence of the second embodiment of the present invention. In FIG. 6, the same reference numerals are given to the same components as those of FIG. 4.

In FIG. 6, in a base station 10, an annunciation information transmission part 11 outputs annunciation information and common control information. A data transmission part 12 outputs control data and user data. A frequency changing part 13 changes a transmission signal of the provided annunciation information and common control information or control data and user data, into a carrier frequency of 2 GHz.

A frequency changing part 14 changes a transmission signal of the provided annunciation information and common control information or control data and user data, into a carrier frequency of 800 MHz. A mixing part 15 mixes the transmission signals of the above-mentioned carrier frequencies 2 GHz and 800 MHz, and transmits the same from an antenna.

A reception part 16 demodulates a signal received by the antenna and extracts positional information transmitted by a mobile station 20. An operating frequency control part 17 controls a switch 18 according to the thus-extracted positional information and cell configuration information which the base station has, and provides the control and user data from the data transmission part 12 to either the frequency changing part 13 or 14.

In the mobile station 20, a positional information detection part 31 detects current positional information. In the configuration, a GPS (Global Positioning System) 30 is used to detect positional information of the mobile station 20. The detected positional information is provided to a transmission part 25, and the transmission part 25 maps the positional information to a physical channel corresponding to the annunciation information, and transmits the same from the antenna, to the base station 10.

A frequency changing part 21 separates a signal received via the antenna into components of the carrier frequencies of 2 GHz and 800 MHz, and provides the same to an operating frequency control part 32. The operating frequency control part 32 receives a propagation loss comparison result by either the component of the carrier frequency 2 GHz or the component of the carrier frequency 800 MHz, and controls a switch 26 based on the propagation loss comparison result. The switch 26 provides the carrier frequency component of the components of the carrier frequencies 2 GHz and 800 MHz output by the operating frequency changing part 21, by which component the control data and user data is transmitted, to a reception part 27. The reception part 27 demodulates the provided signal.

In FIG. 7, the annunciation information and common control information from the base station 10 is transmitted by both carrier frequencies 2 GHz and 800 MHz (Step S30).

In the mobile station 20, the annunciation information and common control information are received from the base station 10, and also (Step S31), the positional information detection part 31 receives GPS information (Step S32), and current positional information is detected (Step S33). The detected positional information is provided to the transmission part 25, the transmission part 25 maps the positional information to the physical channel corresponding to the annunciation information, and transmits the same to the base station 10 (Step S34). It is noted that, the carrier frequency by which the mobile station 10 transmits the positional information may be one of or both of the 2 GHz and 800 MHz.

In the base station 10, the reception part 16 extracts the positional information transmitted by the mobile station 20, and provides the same to the operating frequency control part 29. The operating frequency control part 29 uses the received positional information of the mobile station 20 and the positional information (cell configuration information) of the base station, to calculate propagation losses of both the carrier frequencies 2 GHz and 800 MHz (Steps S35, S36), and determine a frequency by which data (the control data and user data) other than the annunciation information and the common control information are to be transmitted (Step S37).

A method to determine is such that the frequency for which the propagation loss obtained from the formula (1) based on the positional information of the mobile station 20 and the positional information of the base station 10 is smaller is selected. There, as the positional information used for the selection, instantaneous data, an average for a fixed period, a moving average or such, may be used.

As a result, transmission is made only by either the carrier frequency 2 GHz or 800 MHz, which has the higher reception quality from the propagation loss comparison result (Steps S38, S39), and thus, the control data and user data is transmitted only by either the carrier frequency 2 GHz or 800 GHz, having the higher reception quality (Steps S40, S41).

In the mobile station 20, the switch 26 is controlled based on the propagation loss comparison result (Step S42), and either the carrier frequency 2 GHz or 800 GHz, having the higher reception quality, is demodulated by the reception part 27 (Steps S43, S44).

As a result, it is possible to carry out communication with the frequency, having the smaller propagation loss in the mobile station, i.e., having the higher reception quality. For example, in the cell configuration shown in FIG. 3, the mobile station of the position #1 is far from the base station 1 of the carrier frequency 800 MHz, while it is close to the base station 2 of the carrier frequency 2 GHz. As a result, the propagation loss in the carrier frequency 2 GHz is smaller than the propagation loss in the carrier frequency 800 MHz, and as a result, the carrier frequency 2 GHz is used for communication of the control data and user data.

Further, the mobile station of the position #2 is close to the base station 1 of the carrier frequency 800 MHz, while it is far from the base station 2 of the carrier frequency 2 GHz. As a result, the propagation loss in the carrier frequency 800 MHz is smaller than the propagation loss in the carrier frequency 2 GHz, and as a result, the carrier frequency 800 MHz is used for communication of the control data and user data.

In the present embodiment, frequency selection is made with the use of the positional information. As a result, in comparison to the first embodiment in which frequency selection is made with the use of the reception electric field intensity as an index, it is possible to select a frequency having higher average electric field intensity. On one hand, according to the first embodiment, it is possible to select a frequency having higher reception quality in a location such as that behind a building where electric wave cannot be easily reached.

<Third Embodiment>

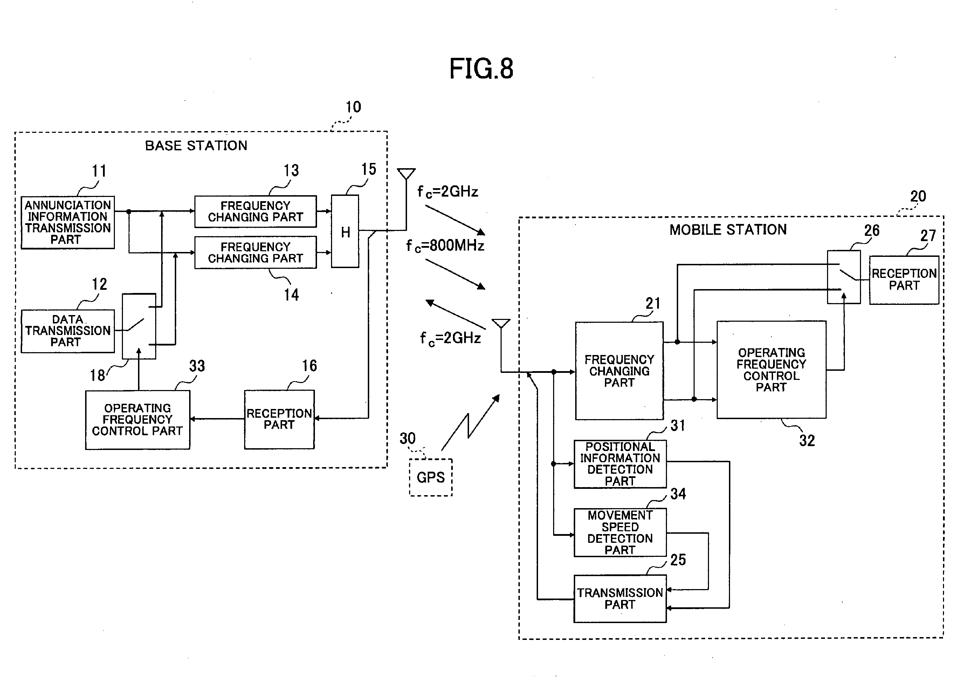

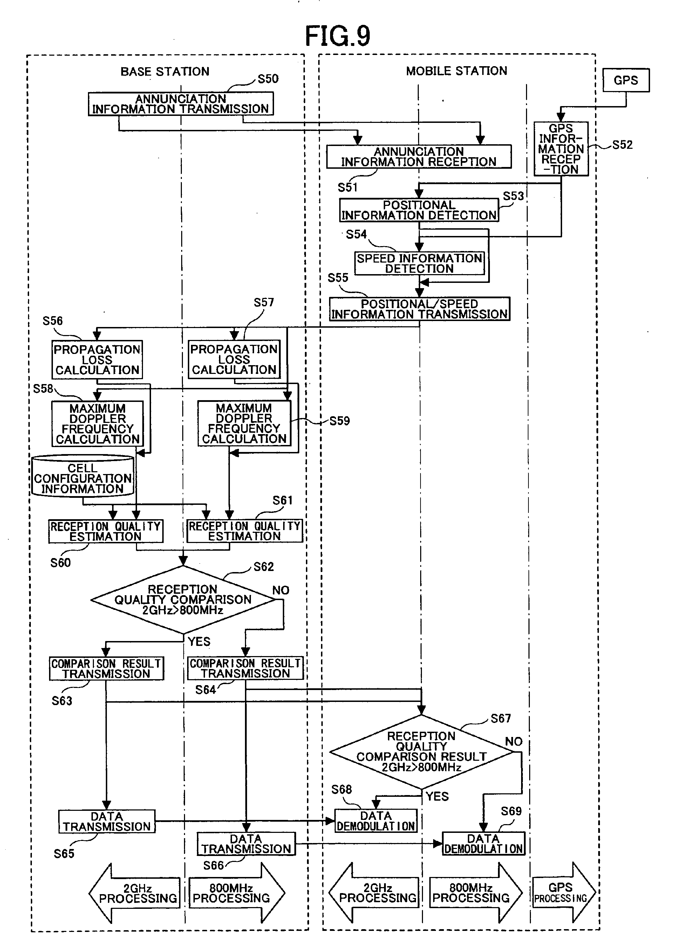

FIG. 8 shows a block configuration of a third embodiment of the present invention, and FIG. 9 shows an operation sequence of the third embodiment of the present invention. In FIG. 8, the same reference numerals are given to the same components as those of FIG. 6.

In FIG. 8, in a base station 10, an annunciation information transmission part 11 outputs annunciation information and common control information. A data transmission part 12 outputs control data and user data. A frequency changing part 13 changes a transmission signal of the provided annunciation information and common control information or control data and user data, into the carrier frequency of 2 GHz.

A frequency changing part 14 changes the transmission signal of the provided annunciation information and common control information or control data and user data, into the carrier frequency of 800 MHz. A mixing part 15 mixes the transmission signals of the above-mentioned carrier frequencies 2 GHz and 800 MHz, and transmits the same from an antenna.

A reception part 16 demodulates a signal received by the antenna and extracts positional information and a movement speed transmitted by a mobile station 20. An operating frequency control part 17 controls a switch 18 according to the thus-extracted positional information and cell configuration information which the base station has, as well as the movement speed, and provides the control and user data from the data transmission part 12 to either the frequency changing part 13 or 14.

In the mobile station 20, a positional information detection part 31 uses a GPS 30 to detect current positional information of the mobile station 20. Further, a movement speed detection part 34 uses the GPS 30 to detect a movement speed of the mobile station 20.

The detected positional information and movement speed are provided to a transmission part 25, and the transmission part 25 maps the positional information to a physical channel corresponding to the annunciation information, and transmits the same from the antenna, to the base station 10.

A frequency changing part 21 separates a signal received via the antenna into components of the carrier frequencies of 2 GHz and 800 MHz, provides the same to an operating frequency control part 32. The operating frequency control part 32 receives a propagation loss comparison result by either the component of the carrier frequency 2 GHz or the component of the carrier frequency 800 MHz, and controls a switch 26 based on the propagation loss comparison result. The switch 26 provides a carrier frequency component of the components of the carrier frequencies 2 GHz and 800 MHz output by the frequency changing part 21, by which component the control data and user data is transmitted, to a reception part 27. The reception part 27 demodulates the provided signal.

In FIG. 9, the annunciation information and common control information from the base station 10 is transmitted by both carrier frequencies 2 GHz and 800 MHz (Step S50).

In the mobile station 20, the annunciation information and common control information are received from the base station 10, and also (Step S51), the positional information detection part 31 receives GPS information (Step S52), and detects current positional information (Step S53). Further, a movement speed is detected (Step S54). The detected positional information and movement speed are provided to the transmission part 25, the transmission part 25 maps the positional information and movement speed to the physical channel corresponding to the annunciation information, and transmits the same to the base station 10 (Step S55). It is noted that, the carrier frequency by which the mobile station 10 transmits the positional information may be one of or both of the 2 GHz and 800 MHz.

In the base station 10, the reception part 16 extracts the positional information and movement speed transmitted by the mobile station 20, and provides the same to the operating frequency control part 29. The operating frequency control part 29 uses the received positional information of the mobile station 20 and the positional information (cell configuration information) of the base station, to calculate propagation losses of both the carrier frequencies 2 GHz and 800 MHz (Steps S56, S57). Further, the maximum Doppler frequencies of both carrier frequencies 2 GHz and 800 MHz are calculated (Steps S58, S59).

Then, reception quality of the respective carrier frequencies 2 GHz and 800 MHz is estimated from the propagation losses and the maximum Doppler frequencies of the respective carrier frequencies 2 GHz and 800 MHz (Steps S60, S61), and a frequency by which data (the control data and user data) other than the annunciation information and the common control information are to be transmitted is determined (Step S62).

A method to determine is such that, the propagation loss is obtained from the formula (1) based on the positional information of the mobile station 20, the positional information of the base station and the movement speed, the maximum Doppler frequency is obtained from the formula (2), further, reception electric field intensity of the mobile station is estimated from the propagation loss and transmission power of each carrier frequency transmitted from the base station, and reception quality is estimated from the reception electric field intensity and the maximum Doppler frequency of each carrier frequency. As a result, a frequency having the higher reception quality is selected. There, as the propagation loss and the maximum Doppler frequency used for the selection, instantaneous data, averages for a fixed period, moving averages or such, may be used.

As a result, transmission is made only by either the carrier frequency 2 GHz or 800 MHz, which has the higher reception quality of the reception quality comparison result (Steps S63, S64), and thus, the control data and user data is transmitted only by either the carrier frequency 2 GHz or 800 GHz, having the higher reception quality (Steps S40, S41).

In the mobile station 20, the switch 26 is controlled based on the reception quality comparison result (Step S67), and either the carrier frequency 2 GHz or 800 GHz, having the higher reception quality, is demodulated by the reception part 27 (Steps S68, S69).

In the present embodiment, frequency selection is made with the use of the movement speed in addition to the positional information. As a result, in comparison to the second embodiment in which frequency selection is made only with the use of the positional information, it is possible to carry out high quality communication with frequency selection more optimally since the information amount used as the indexes thus increases.

<Fourth Embodiment>

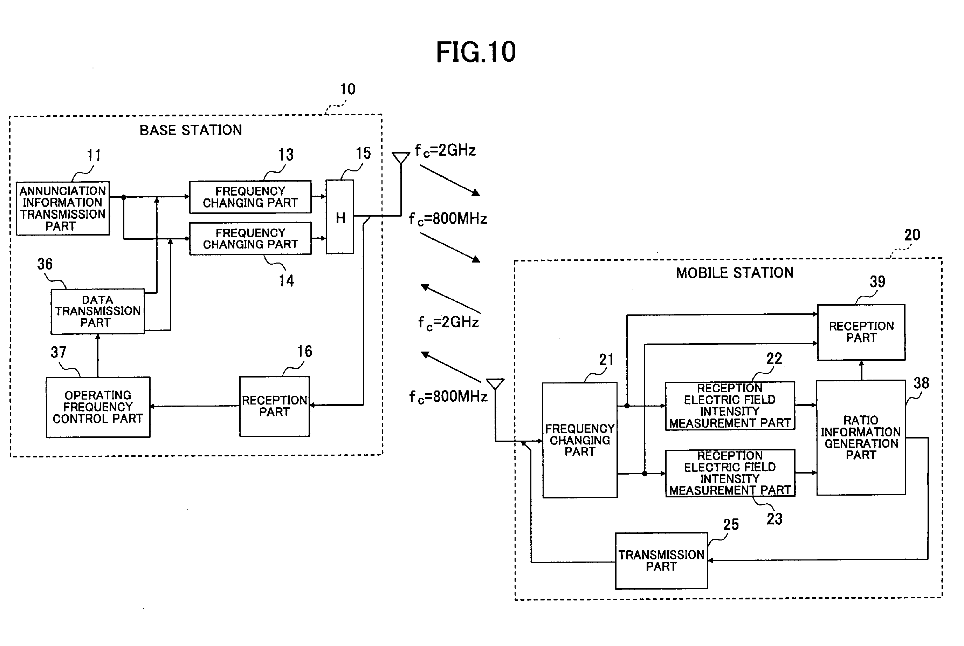

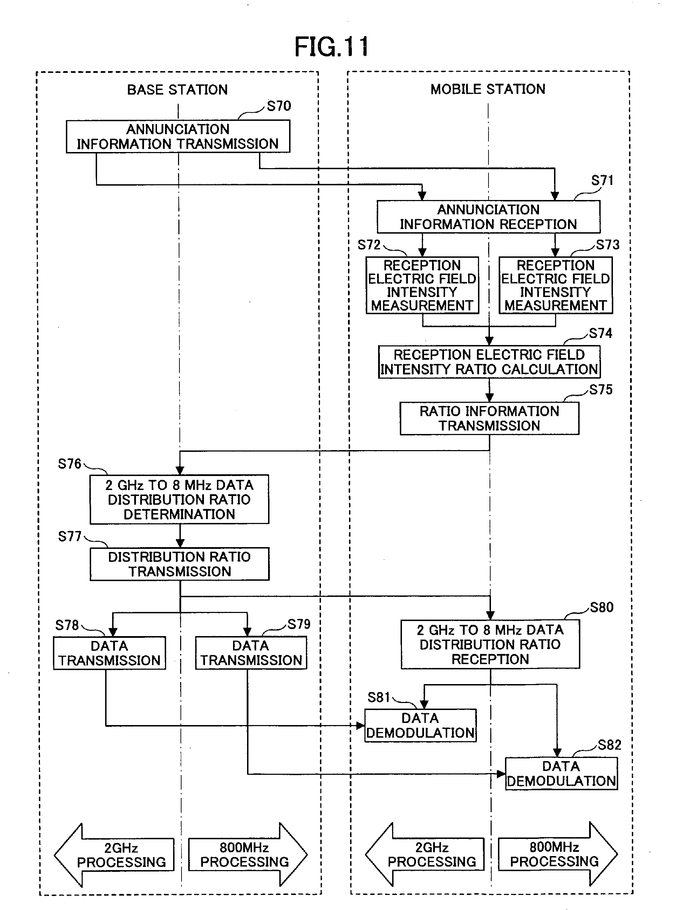

FIG. 10 shows a block configuration of a fourth embodiment of the present invention and FIG. 11 shows an operation sequence of the fourth embodiment of the present invention. In FIG. 10, the same reference numerals are given to components the same as those of FIG. 4. In FIG. 10, in a base station 10, an annunciation information transmission part 11 outputs annunciation information and common control information. A data transmission part 36 outputs control data and user data. A frequency changing part 13 changes a transmission signal of the provided annunciation information and common control information or control data and user data, into a carrier frequency of 2 GHz.

A frequency changing part 14 changes the transmission signal of the annunciation information and common control information or control data and user data, into a carrier frequency of 800 MHz. A mixing part 15 mixes the transmission signals of the above-mentioned carrier frequencies 2 GHz and 800 MHz, and transmits the same from an antenna.

A reception part 16 demodulates a signal received by the antenna and extracts a reception electric field intensity ratio transmitted by a mobile station 20. An operating frequency control part 37 determines a distribution ratio based on the extracted electric field intensity ratio, and distributes the control data and user data to the frequency changing parts 13 and 14, according to the distribution ratio.

In the mobile station 20, a frequency changing part 21 separates a signal received via an antenna into components of the carrier frequencies of 2 GHz and 800 MHz, provides the component of the carrier frequency 2 GHz to a reception electric field intensity changing part 22, and provides the component of the carrier frequency 800 MHz to a reception electric field intensity changing part 23. The reception electric field intensity measurement parts 22 and 23 measure reception electric field intensity for the respective one of the carrier frequencies.

A ratio information generation part 38 generates a ratio of the reception electric field intensity between the carrier frequencies 2 GHz and 800 MHz, provides it to a transmission part 25, and also, controls a reception part 39 based on the distribution ratio received from the base station 10. The transmission part 25 maps the reception electric field intensity ratio to a physical channel corresponding to the annunciation information, and transmits the same from the antenna, to the base station 10. The reception part 39 demodulates the respective components of the carrier frequencies 2 GHz and 800 MHz output from the frequency changing part 21, and combines them according to the distribution ratio.

In FIG. 11, the annunciation information and common control information from the base station 10 are transmitted by both carrier frequencies 2 GHz and 800 MHz (Step S70).

In the mobile station 20, the frequency changing part 21 separates the reception signal into the two carrier frequency components (Step S71). The reception electric field measurement parts 22 and 23 measure the reception electric field intensity of the respective ones of the carrier frequencies 2 GHz and 800 MHz (Steps S72, S73).

The ratio information generation part 38 calculates a ratio of the reception electric field intensity (Step S74), the transmission part 25 maps the reception electric field intensity ratio to the physical channel corresponding to the annunciation information, and transmits the same by the carrier frequency 2 GHz to the base station 10 (Step S75). It is noted that the carrier frequency by which the mobile station 10 transmits the reception electric field intensity ratio may be one of or both of the 2 GHz and 800 MHz.

In the base station 10, the reception part 16 extracts the reception electric field intensity ratio transmitted by the mobile station 20, and the operating frequency control part 37 uses the reception electric field intensity ratio to determine a distribution ratio of a data amount for each carrier frequency by which data (the control data and user data) other than the annunciation information and the common control information are to be transmitted (Step S76), and transmits the distribution ratio to the mobile station 20 (Step S77).

A method to determine is such that, according to the ratio of the reception electric field intensity, a more data amount is made to be transmitted by the frequency having the larger electric field intensity, while, a less data amount is made to be transmitted by the frequency having the lower electric field intensity.

Further, as to the data distribution ratio, it may be determined by controlling an encoding ratio of an error correction code for when data is encoded, in such a manner that reception quality such as BER (Bit Error Rate) which is estimated from the reception electric field intensity becomes equal. It is noted that the BER decreases as the encoding ratio is reduced. There, as the reception electric field intensity used for the selection, instantaneous data, an average for a fixed period, a moving average or such, may be used.

As a result, the control data and user data are transmitted by the carrier frequencies 2 GHz and 800 GHz (Steps S78, S79).

In the mobile station 20, the reception part 10 receives the distribution ratio from the base station 10 (Step S80), demodulates the components of the respective carrier frequencies 2 GHz and 800 MHz (Steps S81, S82), and combines them according to the above-mentioned distribution ratio.

Thereby, the control data and user data can be transmitted in such an environment that the reception quality is the same although the information amount (data amount) is different. According to the present embodiment, the data amounts transmitted by the respective carrier frequencies are controlled with the use of the reception electric field intensity ratio. As a result, in comparison to the first embodiment in which the electric field intensity is used as an index to carry out frequency selection, it is possible to transmit a more data amount since the two frequencies are used. Further, as the two frequencies are used, it is possible to reduce a possibility of an interruption of communication since communication can be continued by another frequency when, in one frequency, the reception electric field intensity lowers remarkably, and thus, communication is not available.

<Fifth Embodiment>

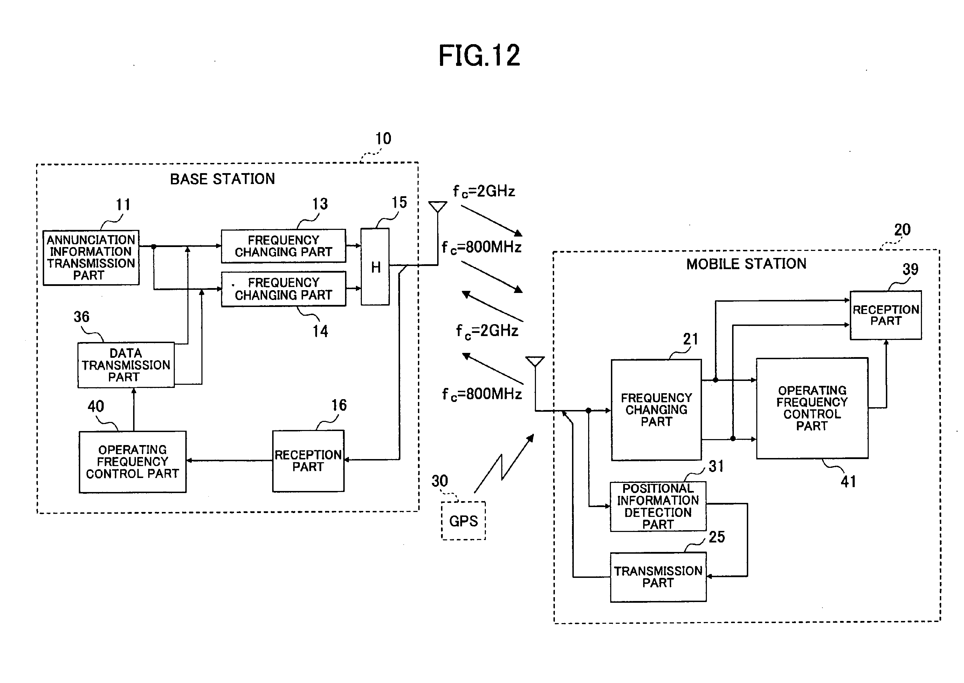

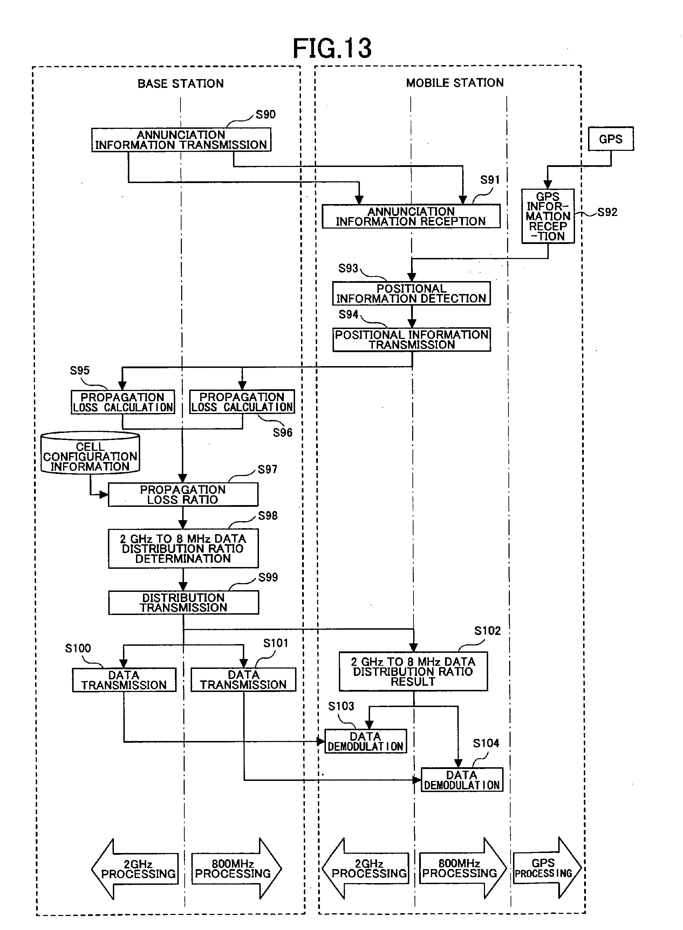

FIG. 12 shows a block configuration of a fifth embodiment of the present invention, and FIG. 13 shows an operation sequence of the fifth embodiment of the present invention. In FIG. 12, the same reference numerals are given to the same components as those of FIG. 6 and FIG. 10.

In FIG. 12, in a base station 10, an annunciation information transmission part 11 outputs annunciation information and common control information. A data transmission part 36 outputs control data and user data. A frequency changing part 13 changes a transmission signal of the provided annunciation information and common control information or control data and user data, into a carrier frequency of 2 GHz.

A frequency changing part 14 changes the transmission signal of the provided annunciation information and common control information or control data and user data, into a carrier frequency of 800 MHz. A mixing part 15 mixes the transmission signals of the above-mentioned carrier frequencies 2 GHz and 800 MHz, and transmits the same from an antenna.

A reception part 16 demodulates a signal received by the antenna and extracts positional information transmitted by a mobile station 20. An operating frequency control part 40 determines a distribution ratio based on the thus-extracted positional information and cell configuration information which the base station has, and the data transmission part 36 distributes the control data and user data to the frequency changing parts 13 and 14 according to the distribution ratio.

In the mobile station 20, a positional information detection part 31 uses a GPS 30, to detect positional information of the mobile station 20. The detected positional information is provided to a transmission part 25, and the transmission part 25 maps the positional information to a physical channel corresponding to the annunciation information, and transmits the same from the antenna, to the base station 10.

A frequency changing part 21 separates a signal received via the antenna into components of the carrier frequencies of 2 GHz and 800 MHz, and provides the same to an operating frequency control part 41. The operating frequency control part 41 receives the distribution ratio between the carrier frequency 2 GHz and the carrier frequency 800 MHz from the base station 10, and controls the reception part 39 based on the distribution ratio. The reception part 27 demodulates the components of the carrier frequency 2 GHz and the carrier frequency 800 MHz output by the frequency changing part 21, and combines them according to the distribution ratio.

In FIG. 13, the annunciation information and common control information from the base station 10 are transmitted by both carrier frequencies 2 GHz and 800 MHz (Step S90).

In the mobile station 20, the annunciation information and common control information are received from the base station 10, and also (Step S91), the positional information detection part 31 receives GPS information (Step S92), and current positional information is detected (Step S93). The detected positional information is provided to the transmission part 25, the transmission part 25 maps the positional information to the physical channel corresponding to the annunciation information, and transmits the same to the base station 10 (Step S94). It is noted that, the carrier frequency by which the mobile station 10 transmits the positional information may be one of or both of the 2 GHz and 800 MHz.

In the base station 10, the reception part 16 extracts the positional information transmitted by the mobile station 20, and provides the same to the operating frequency control part 29. The operating frequency control part 29 uses the received positional information of the mobile station 20 and the positional information (cell configuration information) of the base station, to calculate propagation losses of both the carrier frequencies 2 GHz and 800 MHz (Steps S95, S96), obtains the propagation loss ratio (Step S97), determine the distribution ratio of data amounts for the respective carrier frequencies by which data (the control data and user data) other than the annunciation information and the common control information are to be transmitted (Step S98), and transmits the distribution ratio to the mobile station 20 (Step S99).

A method to determine is such that, according to the propagation loss ratio obtained from the formula (1) based on the positional information of the mobile station 20 and the positional information of the base station 10, the distribution ratio is determined in such a manner that a more data amount is to be transmitted by a frequency having a smaller propagation loss, while, a less data amount is to be transmitted by a frequency having a larger propagation loss.

Further, as to the data distribution ratio, it may be determined by estimating the reception electric field intensity in the mobile station from the propagation loss and transmission power of each carrier frequency transmitted by the base station, and controlling an encoding ratio of an error correction code for when data is encoded, in such a manner that reception quality such as BER (Bit Error Rate) which is estimated from the reception electric field intensity becomes equal. It is noted that the BER decreases as the encoding ratio is reduced. There, as the propagation loss used for the selection, instantaneous data, an average for a fixed period, a moving average or such, may be used.

As a result, the control data and user data are transmitted by the carrier frequencies 2 GHz and 800 GHz (Steps S100 and S101).

In the mobile station 20, the reception part 10 receives the distribution ratio from the base station (Step S102), demodulates the components of the respective carrier frequencies 2 GHz and 800 MHz (Steps S103, S104), and combines them according to the above-mentioned distribution ratio.

Thereby, the control data and user data can be transmitted in such an environment that the reception quality is the same although the information amount (data amount) is different. According to the present embodiment, the data amounts transmitted by the respective carrier frequencies are controlled with the use of the propagation loss. As a result, in comparison to the second embodiment in which the propagation loss is used as an index to carry out frequency selection, it is possible to transmit a more data amount since the two frequencies are used. Further, as the two frequencies are used, it is possible to reduce a possibility of an interruption of communication since communication can be continued by another frequency when, in one frequency, the reception electric field intensity lowers remarkably, and thus, communication is not available.

<Sixth Embodiment>

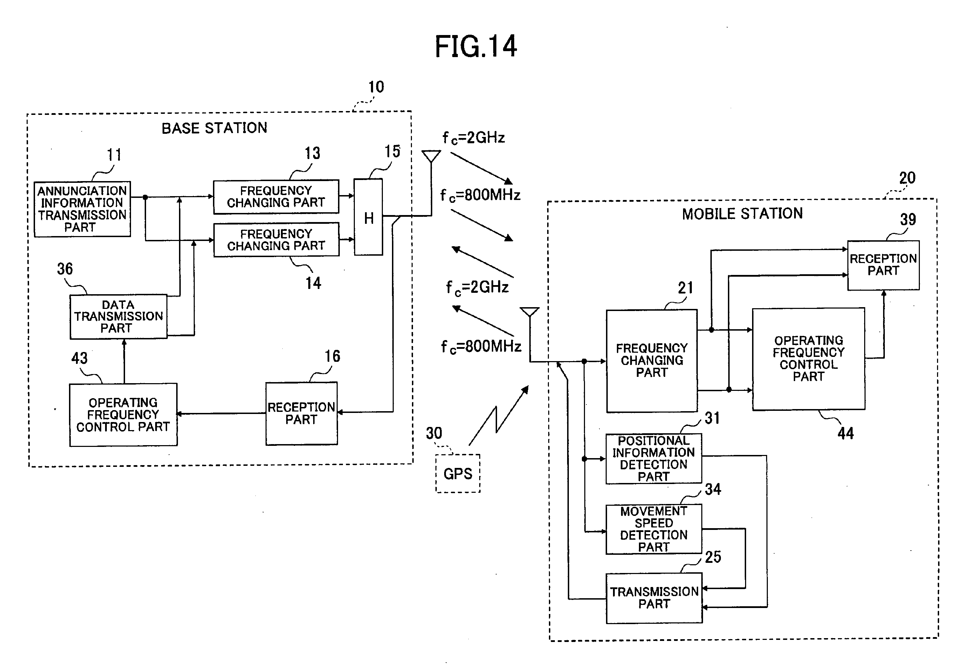

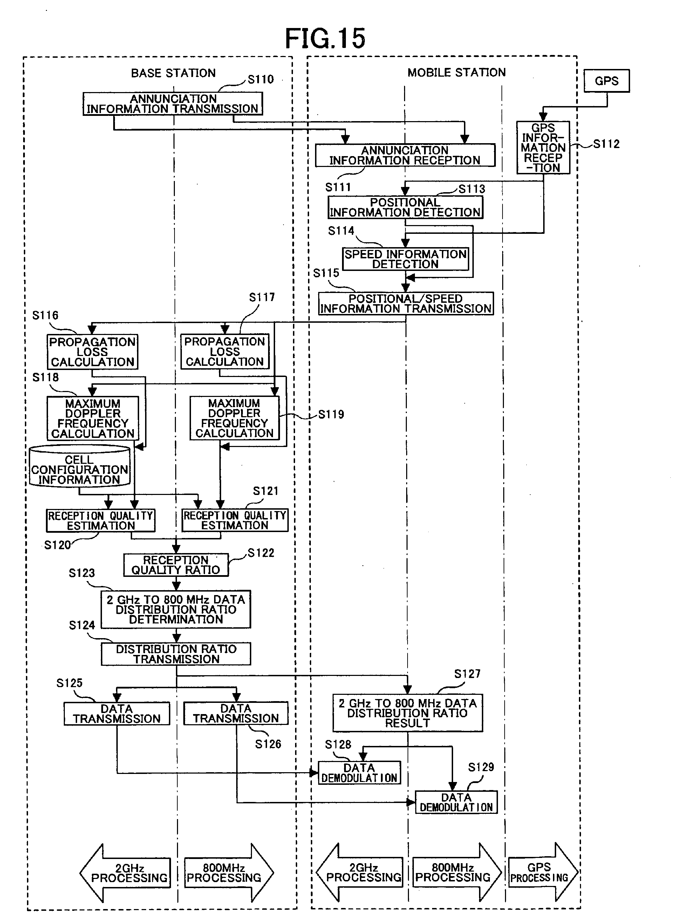

FIG. 14 shows a block configuration of a sixth embodiment of the present invention, and FIG. 15 shows an operation sequence of the sixth embodiment of the present invention. In FIG. 14, the same reference numerals are given to the same components as those of FIG. 8 and FIG. 10.

In FIG. 14, in a base station 10, an annunciation information transmission part 11 outputs annunciation information and common control information. A data transmission part 36 outputs control data and user data. A frequency changing part 13 changes a transmission signal of the provided annunciation information and common control information or control data and user data, into a carrier frequency of 2 GHz.

A frequency changing part 14 changes a transmission signal of the provided annunciation information and common control information or control data and user data, into a carrier frequency of 800 MHz. A mixing part 15 mixes the transmission signals of the above-mentioned carrier frequencies 2 GHz and 800 MHz, and transmits the same from an antenna.

A reception part 16 demodulates a signal received by the antenna and extracts positional information and a movement speed transmitted by a mobile station 20. An operating frequency control part 43 determines a distribution ratio based on the thus-extracted positional information and cell configuration information which the base station has, as well as the movement speed, and the data transmission part 36 distributes the control and user data to the frequency changing parts 13 and 14 according to the distribution ratio.

In the mobile station 20, a positional information detection part 31 uses a GPS 30 to detect current positional information of the mobile station 20. Further, a movement speed detection part 34 uses the GPS 30 to detect a movement speed of the mobile station 20.

The detected positional information and movement speed are provided to a transmission part 25, and the transmission part 25 maps the positional information to a physical channel corresponding to the annunciation information, and transmits the same from the antenna, to the base station 10.

A frequency changing part 21 separates a signal received via the antenna into components of the carrier frequencies of 2 GHz and 800 MHz, and provides the same to an operating frequency control part 44. The operating frequency control part 44 receives the distribution ratio between the carrier frequency 2 GHz and the carrier frequency 800 MHz from the base station, and controls the reception part 39 based on the distribution ratio. The reception part 39 demodulates the respective components of the carrier frequencies 2 GHz and 800 MHz, and combines them according to the distribution ratio.

In FIG. 15, the annunciation information and common control information from the base station 10 are transmitted by both carrier frequencies 2 GHz and 800 MHz (Step S110).

In the mobile station 20, the annunciation information and common control information are received from the base station 10, and also (Step S111), the positional information detection part 31 receives GPS information (Step S112), and detects current positional information (Step S113). Further, a movement speed is detected (Step S114). The detected positional information and movement speed are provided to the transmission part 25, the transmission part 25 maps the positional information and movement speed to the physical channel corresponding to the annunciation information, and transmits the same to the base station 10 (Step S115). It is noted that, the carrier frequency by which the mobile station 10 transmits the positional information may be one of or both of 2 GHz and 800 MHz.

In the base station 10, the reception part 16 extracts the positional information and movement speed transmitted by the mobile station 20, and provides the same to the operating frequency control part 43. The operating frequency control part 43 uses the received positional information of the mobile station 20 and the positional information (cell configuration information) of the base station, to calculate propagation losses of both the carrier frequencies 2 GHz and 800 MHz (Steps S116, S117). Further, the maximum Doppler frequencies of both carrier frequencies 2 GHz and 800 MHz are calculated (Steps S118, S119).

Then, reception quality such as BER of the respective carrier frequencies 2 GHz and 800 MHz is estimated from the propagation losses and the maximum Doppler frequencies of the respective carrier frequencies 2 GHz and 800 MHz (Steps S120, S121), the reception quality ratio is obtained (Step S122), the distribution ratio of a data amount for each carrier frequency by which data (the control data and user data) other than the annunciation information and the common control information are to be transmitted is determined (Step S123), and the distribution ratio is transmitted to the mobile station 20 (Step S124).

A method to determine is such that a propagation loss is obtained from the formula (1) based on the positional information of the mobile station 20, the positional information of the base station and the movement speed, the maximum Doppler frequency is obtained from the formula (2), further, reception electric field intensity of the mobile station is estimated from the propagation loss and transmission power of each carrier frequency transmitted from the base station, and reception quality (BER) is estimated from the reception electric field intensity and the maximum Doppler frequency of each carrier frequency, and the reception quality ratio is obtained. As a result, the distribution ratio is determined in such a manner that a more data amount is to be transmitted by a frequency having a higher reception quality, while, a less data amount is to be transmitted by a frequency having a lower reception quality.

Further, as to the data distribution ratio, it may be determined by controlling an encoding ratio of an error correction code for when data is encoded, in such a manner that the estimated reception quality such as BER becomes equal.

As a result, the control data and user data are transmitted by the carrier frequencies 2 GHz and 800 GHz (Steps S125, S126).

In the mobile station 20, the reception part 10 receives the distribution ratio from the base station (Step S127), demodulates the components of the respective carrier frequencies 2 GHz and 800 MHz (Steps S128, S129), and combines them according to the above-mentioned distribution ratio.

Thereby, the control data and user data can be transmitted in such an environment that the reception quality is the same although the information amount (data amount) is different. According to the present embodiment, the data amounts transmitted by the respective carrier frequencies are controlled with the use of the estimated reception quality. As a result, in comparison to the third embodiment in which the estimated reception quality is used as an index to carry out frequency selection, it is possible to transmit a more data amount since the two frequencies are used. Further, as the two frequencies are used, it is possible to reduce a possibility of an interruption of communication since communication can be continued by another frequency when, in one frequency, the reception electric field intensity lowers remarkably, and thus, communication is not available.

It is noted that, the reception electric field measurement parts 22, 23 correspond to a reception quality correspondent value detecting means recited in the claims; the transmission part 25 corresponds to notifying means; the positional information detection part 31 corresponds to positional information detecting means; the movement speed detection part 34 corresponds to movement speed detecting means; the operating frequency control parts 17, 29 and 33 correspond to carrier frequency determining means; and the operating frequency control parts 37, 40 and 43 correspond to distribution ratio determining means.

**Claims**

1. A multi-carrier communication method for carrying out communication between a mobile station and a base station with the use of a plurality of carrier frequencies within the same area, comprising:

   detecting a reception quality correspondent value of each of the plurality of carrier frequencies in said mobile station; and

determining a carrier frequency to be used for communication based on the reception quality correspondent values.

2. A multi-carrier communication method for carrying out communication between a mobile station and a base station with the use of a plurality of carrier frequencies within the same area, comprising:

detecting, in the mobile station, current positional information of the mobile station, and notifying the base station thereof; and
obtaining, in the base station, a distance between the base station and the mobile station based on the positional information, and determining a carrier frequency to be used for communication based on the distance.

3. A multi-carrier communication method for carrying out communication between a mobile station and a base station with the use of a plurality of carrier frequencies within the same area, comprising:

detecting, in the mobile station, current positional information and a movement speed of the mobile station, and notifying the base station thereof; and
obtaining, in the base station, a distance between the base station and the mobile station based on the positional information, and determining a carrier frequency to be used for communication based on the movement speed of the mobile station and the distance.

4. A multi-carrier communication method for carrying out communication between a mobile station and a base station with the use of a plurality of carrier frequencies within the same area, comprising:

detecting a reception quality correspondent value of each of the plurality of carrier frequencies in said mobile station; and
determining a distribution ratio of data to be distributed to the respective ones of the plurality of carrier frequencies, based on the reception quality correspondent values.

5. A multi-carrier communication method for carrying out communication between a mobile station and a base station with the use of a plurality of carrier frequencies within the same area, comprising:

detecting, in the mobile station, current positional information of the mobile station, and notifying the base station thereof; and
obtaining, in the base station, a distance between the base station and the mobile station based on the positional information, and determining a distribution ratio of data to be distributed to the respective ones of the plurality of carrier frequencies, based on the distance.

6. A multi-carrier communication method for carrying out communication between a mobile station and a base station with the use of a plurality of carrier frequencies within the same area, comprising:

detecting, in the mobile station, current positional information and a movement speed of the mobile station, and notifying the base station thereof; and
obtaining, in the base station, a distance between the base station and the mobile station based on the positional information, and determining a distribution ratio of data to be distributed to the respective ones of the plurality of carrier frequencies, based on the movement speed of the mobile station and the distance.

7. A mobile station of a multi-carrier communication system carrying out communication between the mobile station and a base station with the use of a plurality of carrier frequencies within the same area, comprising:

reception quality correspondent value detecting means for detecting a reception quality correspondent value of each of the plurality of carrier frequencies; and
notifying means for notifying the base station of the reception quaintly correspondent values of the respective ones of the plurality of carrier frequencies.

8. A mobile station of a multi-carrier communication system carrying out communication between the mobile station and a base station with the use of a plurality of carrier frequencies within the same area, comprising:

positional information detecting means for detecting current positional information of the mobile station; and

notifying means for notifying the base station of the thus-detected positional information.

9. A mobile station of a multi-carrier communication system carrying out communication between the mobile station and a base station with the use of a plurality of carrier frequencies within the same area, comprising:

positional information detecting means for detecting current positional information of the mobile station;
movement speed detecting means for detecting a movement speed of the mobile station; and
notifying means for notifying the base station of the thus-detected positional information and movement speed.

10. A base station of a multi-carrier communication system carrying out communication between a mobile station and the base station with the use of a plurality of carrier frequencies within the same area, comprising:

carrier frequency determining means for determining a carrier frequency used for communication based on reception quality correspondent values of the respective ones of the plurality of carrier frequencies notified of by the mobile station.

11. A base station of a multi-carrier communication system carrying out communication between a mobile station and the base station with the use of a plurality of carrier frequencies within the same area, comprising:

carrier frequency determining means for obtaining a distance between the base station and the mobile station based on positional information of the mobile station notified of by the mobile station, and determining a carrier frequency used for communication based on the distance.

12. A base station of a multi-carrier communication system carrying out communication between a mobile station and the base station with the use of a plurality of carrier frequencies within the same area, comprising:

carrier frequency determining means for obtaining a distance between the base station and the mobile station based on positional information and a movement speed of the mobile station notified of by the mobile station, and determining a carrier frequency used for communication based on the movement speed of the mobile station and the distance.

13. A base station of a multi-carrier communication system carrying out communication between a mobile station and the base station with the use of a plurality of carrier frequencies within the same area, comprising:

carrier frequency determining means for determining a distribution ratio of data to be distributed to the plurality of frequencies based on reception quality correspondent values of the respective ones of the plurality of carrier frequencies notified of by the mobile station.

14. A base station of a multi-carrier communication system carrying out communication between a mobile station and the base station with the use of a plurality of carrier frequencies within the same area, comprising:

carrier frequency determining means for obtaining a distance between the base station and the mobile station based on positional information of the mobile station notified of by the mobile station, and determining a distribution ratio of data to be distributed to the plurality of frequencies based on the distance.

15. A base station of a multi-carrier communication system carrying out communication between a mobile station and the base station with the use of a plurality of carrier frequencies within the same area, comprising:

carrier frequency determining means for obtaining a distance between the base station and the mobile station based on positional information and a movement speed of the mobile station notified of by the mobile station, and determining a distribution ratio of data to be distributed to the plurality of frequencies based on the movement speed of the mobile station and the distance.

# FIG.1

# FIG.2

# FIG.3

# FIG.4

EP 1 855 401 A1

BASE STATION

**11**
ANNUNCIATION INFORMATION TRANSMISSION PART

**13**
FREQUENCY CHANGING PART

**15**
H

$f_c$=2GHz

**14**
FREQUENCY CHANGING PART

**12**
DATA TRANSMISSION PART

**18**

**17**
OPERATING FREQUENCY CONTROL PART

**16**
RECEPTION PART

$f_c$=800MHz

**10**

**20**

MOBILE STATION

**26**

**27**
RECEPTION PART

**21**
FREQUENCY CHANGING PART

**22**
RECEPTION ELECTRIC FIELD INTENSITY MEASUREMENT PART

**24**
RATIO INFORMATION GENERATION PART

**23**
RECEPTION ELECTRIC FIELD INTENSITY MEASUREMENT PART

**25**
TRANSMISSION PART

$f_c$=2GHz

# FIG.5

BASE STATION

MOBILE STATION

ANNUNCIATION
INFORMATION TRANSMISSION — S10

ANNUNCIATION
INFORMATION RECEPTION — S11

RECEPTION
ELECTRIC FIELD
INTENSITY
MEASUREMENT
S12

RECEPTION
ELECTRIC FIELD
INTENSITY
MEASUREMENT
S13

RECEPTION
ELECTRIC FIELD
INTENSITY COMPARISON
2GHz>800MHz — S14
NO

YES

COMPARISON RESULT
TRANSMISSION
S15

RECEPTION
ELECTRIC
FIELD INTENSITY
COMPARISON RESULT
2GHz>800MHz — S16
NO

YES

DATA
TRANSMISSION
S17

DATA
TRANSMISSION
S18

DATA
DEMODULATION
S20

DATA
DEMODULATION
S19

2GHz
PROCESSING

800MHz
PROCESSING

2GHz
PROCESSING

800MHz
PROCESSING

FIG.6

# FIG.7

# FIG.8

EP 1 855 401 A1

# FIG.9

# FIG.10

EP 1 855 401 A1

# FIG.11

# FIG.12

EP 1 855 401 A1

# FIG.13

BASE STATION | MOBILE STATION

ANNUNCIATION INFORMATION TRANSMISSION — S90

ANNUNCIATION INFORMATION RECEPTION — S91

GPS

GPS INFORMATION RECEPTION — S92

POSITIONAL INFORMATION DETECTION — S93

POSITIONAL INFORMATION TRANSMISSION — S94

PROPAGATION LOSS CALCULATION — S95

PROPAGATION LOSS CALCULATION — S96

CELL CONFIGURATION INFORMATION

PROPAGATION LOSS RATIO — S97

2 GHz TO 8 MHz DATA DISTRIBUTION RATIO DETERMINATION — S98

DISTRIBUTION TRANSMISSION — S99

DATA TRANSMISSION — S100

DATA TRANSMISSION — S101

2 GHz TO 8 MHz DATA DISTRIBUTION RATIO RESULT — S102

DATA DEMODULATION — S103

DATA DEMODULATION — S104

2GHz PROCESSING

800MHz PROCESSING

2GHz PROCESSING

800MHz PROCESSING

GPS PROCESSING

# FIG.14

EP 1 855 401 A1

# FIG.15

| BASE STATION | MOBILE STATION | GPS |
|---|---|---|

ANNUNCIATION INFORMATION TRANSMISSION — S110

ANNUNCIATION INFORMATION RECEPTION — S111

GPS INFORMATION RECEPTION — S112

POSITIONAL INFORMATION DETECTION — S113

SPEED INFORMATION DETECTION — S114

POSITIONAL/SPEED INFORMATION TRANSMISSION — S115

PROPAGATION LOSS CALCULATION — S116

PROPAGATION LOSS CALCULATION — S117

MAXIMUM DOPPLER FREQUENCY CALCULATION — S118

MAXIMUM DOPPLER FREQUENCY CALCULATION — S119

CELL CONFIGURATION INFORMATION

RECEPTION QUALITY ESTIMATION — S120

RECEPTION QUALITY ESTIMATION — S121

RECEPTION QUALITY RATIO — S122

2 GHz TO 800 MHz DATA DISTRIBUTION RATIO DETERMINATION — S123

DISTRIBUTION RATIO TRANSMISSION — S124

DATA TRANSMISSION — S125

DATA TRANSMISSION — S126

2 GHz TO 800 MHz DATA DISTRIBUTION RATIO RESULT — S127

DATA DEMODULATION — S128

DATA DEMODULATION — S129

⟨ 2GHz PROCESSING ⟩   ⟨ 800MHz PROCESSING ⟩   ⟨ 2GHz PROCESSING ⟩   ⟨ 800MHz PROCESSING ⟩   ⟨ GPS PROCESSING ⟩

27

<div align="center">**INTERNATIONAL SEARCH REPORT**</div>

| International application No. |
| --- |
| PCT/JP2005/003492 |

| A. CLASSIFICATION OF SUBJECT MATTER |
| --- |
| Int.Cl$^7$ H04J1/00 |

According to International Patent Classification (IPC) or to both national classification and IPC

| B. FIELDS SEARCHED |
| --- |

Minimum documentation searched (classification system followed by classification symbols)
Int.Cl$^7$ H04J1/00, H04J11/00

Documentation searched other than minimum documentation to the extent that such documents are included in the fields searched
Jitsuyo Shinan Koho    1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | JP 2001-268050 A (Fujitsu Ltd.), 28 September, 2001 (28.09.01), Claims 1 to 11 (Family: none) | 1,10 |
| X | JP 2001-148682 A (Victor Company Of Japan, Ltd.), 29 May, 2001 (29.05.01), Claims 1, 2 (Family: none) | 1,10 |
| X | JP 2004-104574 A (Mitsubishi Electric Corp.), 02 April, 2004 (02.04.04), Claims 1, 2 (Family: none) | 1,10 |

| ☐ Further documents are listed in the continuation of Box C. | ☐ See patent family annex. |
| --- | --- |

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 31 May, 2005 (31.05.05) | 21 June, 2005 (21.06.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

## INTERNATIONAL SEARCH REPORT

| International application No. |
|---|
| PCT/JP2005/003492 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
 The search has revealed that "the means for detecting the value corresponding to the reception quality for detecting the value corresponding to the reception quality of each of carrier frequencies and the report means for reporting the value corresponding to the reception quality of each of the carrier frequencies detected" disclosed in the invention of claim 7 are not novel since they are disclosed, for example, in document JP 2004-266585 A (Hitachi, Ltd.), 24 September, 2004, claims 1, 3 and document JP 2005-45504 A (Toshiba Corp.), 17 February, 2005 (17.02.05).
 (Continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1, 10

**Remark on Protest**      ☐ The additional search fees were accompanied by the applicant's protest.

                                   ☐ No protest accompanied the payment of additional search fees.

Form PCT/ISA/210 (continuation of first sheet (2)) (January 2004)

**EP 1 855 401 A1**

| **INTERNATIONAL SEARCH REPORT** | International application No. |
|---|---|
| | PCT/JP2005/003492 |

Continuation of Box No.III of continuation of first sheet(2)

   Accordingly, "the special technical feature" of claims 1, 10 is "to detect the value corresponding to the reception quality of each of the carrier frequencies by a mobile station and to decide the carrier frequency to be used for communication according to the value corresponding to the reception quality". "The special technical feature" of claims 4-6, 13-15 is "to detect the value corresponding to the reception quality of each of the carrier frequencies by a mobile station and to decide the data distribution ratio of data to be distributed to each of the carrier frequencies according to the value corresponding to the reception quality". "The special technical feature" of claims 2, 3, 8, 9, 11, 12 is "to detect position information detecting the position information on the current mobile station and report the detected position information".

Form PCT/ISA/210 (extra sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7087544 A

**Non-patent literature cited in the description**

- **MASAAKI SHINDO.** Radio Wave Propagation of Radio Communication. *Institute of Electronics, Information and Communication Engineers,* 230

- **YOSHIHISA OKUMURA ; MASAAKI SHINDO.** Basis of Mobile Communication. *Institute of Electronics, Information and Communication Engineers,* 63